# EUROPÄISCHE PATENTANMELDUNG

(11) **EP 4 742 076 A1**
(43) Veröffentlichungstag der Anmeldung: **13.05.2026**
(21) Anmeldenummer: 24212195.2
(22) Anmeldetag: 11.11.2024
(51) Int. Cl.: G06F 30/18, G06V 30/422, G06F 111/12, G06F 113/16, G06F 119/18

(54) **SCHALTPLANERKENNUNG MITTELS MASCHINELLEM LERNEN**

(71) Anmelder: Murrelektronik GmbH, 71570 Oppenweiler (DE)
(72) Erfinder: Binder, Sven, 71522 Backnang (DE); Pfestorf, Sebastian, 71522 Backnang (DE)
(74) Vertreter: Bösherz Goebel Patentanwälte

(57) **Zusammenfassung**

Offenbart ist ein Verfahren zur Erzeugung einer maschinenlesbaren Repräsentation eines Schaltplan-Dokuments sowie eine zugehörige Datenverarbeitungsvorrichtung und ein Computerprogramm.

## Beschreibung

### TECHNISCHES GEBIET

Die vorliegende Erfindung betrifft allgemein das Gebiet der Planung, Installation und Einrichtung von elektrischen Anlagen in der Automatisierungstechnik und insbesondere ein Verfahren zur Erzeugung einer maschinenlesbaren Repräsentation eines Schaltplan-Dokuments mit Hilfe von maschinellem Lernen.

### HINTERGRUND

Das Planen, Installieren und Einrichten von elektrischer Automatisierungstechnik ist eine komplexe Aufgabe. Dies gilt für zentralisierte Schaltschrankarchitekturen ebenso wie für dezentralisierte Architekturen, in denen Steuerungsmodule direkt an den Anlagen angebracht werden.

In der modernen Industrieautomation werden elektrische Schaltpläne zunehmend mit digitalen Tools erstellt. Diese Tools ermöglichen zwar eine effiziente grafische Darstellung der elektrischen Komponenten und deren Verbindungen, bieten jedoch oft nur begrenzte Möglichkeiten zur semantischen Überprüfung und automatisierten Weiterverarbeitung der Pläne. Die Schaltpläne werden im Wesentlichen "gemalt", wobei der Elektriker die Komponenten und Verbindungen nach eigenem Ermessen festlegt. Eine automatisierte Überprüfung der logischen Konsistenz und der Einhaltung von Normen und Sicherheitsrichtlinien findet in der Regel nicht statt.

Dies kann zu verschiedenen Problemen führen. Fehlerhafte oder inkonsistente Schaltpläne können beispielsweise zu Fehlfunktionen, Produktionsausfällen oder sogar Sicherheitsrisiken führen. Die manuelle Überprüfung der Pläne ist zeitaufwendig und fehleranfällig, insbesondere bei komplexen Anlagen mit einer Vielzahl von Komponenten und Verknüpfungen.

Es ist daher ein Ziel der vorliegenden Erfindung, die semantischen Analyse von elektrischen Schaltplänen zu verbessern, um die oben genannten Einschränkungen zumindest teilweise zu überwinden.

### ZUSAMMENFASSUNG DER ERFINDUNG

Dies wird durch die in den unabhängigen Ansprüchen definierten Gegenstände gelöst. Vorteilhafte Weiterbildungen von Ausführungsformen der vorliegenden Offenbarung sind in den abhängigen Ansprüchen sowie in der Beschreibung und den Figuren definiert.

Gemäß einem Aspekt der Erfindung wird ein Verfahren zum Erzeugen einer maschinenlesbaren Repräsentation eines Schaltplan-Dokuments bereitgestellt. Das Schaltplan-Dokument kann eine elektrische Anlage, insbesondere eine dezentrale elektrische Anlage, repräsentieren. Das Verfahren kann computer-implementiert sein.

Die elektrische Anlage kann als wenigstens eine der nachfolgend genannten Anlagen ausgebildet sein: eine Automatisierungsanlage, eine Produktionsanlage, eine Logistikanlage, eine Produktionsstraße, ein Bearbeitungszentrum, ein Industrieroboter, eine Fertigungsanlage, ein Aggregat, ein Elektrogerät, oder Kombinationen davon.

Eine "dezentralen Anlage" kann als eine Anlage mit modularem Charakter oder auch als eine mobile oder bewegliche Anlage ausgebildet sein, bei welcher einzelne Teile der Anlage modular an unterschiedlichen Stellen bzw. Orten installiert sind. Diese Installation erfolgt zumindest teilweise manuell durch einen Benutzer wie einen Werker. Anders als bei einer zentralen Anlage, bei der elektrische Betriebsmittel mit einer Punkt-zu-Punkt-Verbindung verbunden sind, d.h. der Startpunkt, die Verbindung und der Endpunkt sind klar definiert, sind elektrische Betriebsmittel einer dezentralen Anlage typischerweise mit einer Modul-Switch-Modul-Hub-Punkt Verbindung verbunden. Dies bedeutet, dass bei dezentralen Anlagen zwischen dem Startpunkt und dem Endpunkt eines elektrischen Betriebsmittels typischerweise mehrere Verbindungsmodule angeordnet sind, um die Verbindung über die örtliche Verteilung herstellen zu können. Aufgrund dieser erhöhten Komplexität ist das Planen, Konstruieren bzw. Instandhalten von dezentralen Anlagen deutlich anspruchsvoller als es bei zentralen Anlagen der Fall ist.

Das Verfahren kann ein Empfangen des Schaltplan-Dokuments umfassen. Das Schaltplan-Dokument kann grafische Schaltplan-Informationen umfassen.

Das Verfahren kann ein Erzeugen der maschinenlesbaren Repräsentation umfassen. Dies kann zumindest teilweise basierend auf den grafischen Schaltplan-Informationen mittels maschinellen Lernens geschehen.

Die maschinenlesbare Repräsentation kann einen auf einer grafischen Benutzeroberfläche darstellbaren Graphen umfassen. Der Graph kann zumindest ein elektrisches Betriebsmittel, welches im Schaltplan-Dokument dargestellt ist, und zumindest eine elektrische Verbindung, welche im Schaltplan-Dokument dargestellt ist, anzeigen.

Durch die so erzeugte maschinenlesbare Repräsentation wird ein semantisches Verständnis eines Schaltplans erzielt, mittels welchem ein software-gestütztes Verfahren zur effizienten Planung, Konstruktion sowie zum effizienten Betrieb einer elektrischen Anlage bereitgestellt werden kann. Dies ist insbesondere für dezentrale Anlagen von Relevanz, da die Komplexität dieser Anlagen im Vergleich zu zentralen Anlagen deutlich höher und somit deren Planung, Konstruktion bzw. Betrieb deutlich anspruchsvoller ist.

Jedoch kann das Verfahren gemäß der vorliegenden Offenbarung auch auf zentrale Anlagen angewandt werden, denn grundsätzlich gilt, dass Verfahren für dezentrale Anlagen auch auf zentrale Anlagen anwendbar sind, wohingegen Verfahren für zentrale Anlagen typischerweise nicht unmittelbar auf Verfahren für dezentrale Anlagen anwendbar sind. Der Grund hierfür ist, wie oben schon beschrieben, die höhere Komplexität der dezentralen Anlagen. Ein Anwendungsfall hierfür liegt beispielsweise in der Neuplanung bzw. dem Umbau einer zentralen Anlage zu einer dezentralen Anlage. In diesem Fall würde das Verfahren zunächst auf den Schaltplan der zentralen Anlage angewandt werden, um eine maschinenlesbare Repräsentation des zugehörigen Schaltplan-Dokuments der zentralen Anlage zu erzeugen. Mittels dieser maschinenlesbaren Repräsentation kann anschließend das Umplanen der zentralen Anlage in eine dezentrale Anlage erfolgen.

Obwohl vorliegend vor allem Schaltplan-Dokumente beschrieben werden, sei betont, dass die hier offenbarten Methodiken entsprechend auch auf andere Arten von Installations-Dokumenten angewendet werden können. Allgemein kann im Wesentlichen jede technische Zeichnung verarbeitet werden, wie beispielsweise Architekturpläne, Prozessidagramme, Fluid-Schaltpläne, Pneumatik-Schaltpläne, oder dergleichen.

Grafische Schaltplan-Informationen können verstanden werden als jede grafische Darstellung von Objekten innerhalb des Schaltplan-Dokuments, wie z.B. Schaltbilder von elektrischen Betriebsmitteln sowie zugehörige Anschlüsse, Klemmen, Verbindungen und dergleichen.

Es kann vorgesehen sein, dass das Erzeugen der maschinenlesbaren Repräsentation ein Erkennen des zumindest einen elektrischen Betriebsmittels umfasst. Es kann vorgesehen sein, dass das Erkennen des zumindest einen elektrischen Betriebsmittels ein Erkennen zumindest eines grafischen Objekts im Schaltplan-Dokument mittels eines Objekterkennungs-Modells umfasst. Hierdurch kann der Computer eine genauere und präzisere Identifizierung von elektrischen Betriebsmitteln wie z.B. Kabel, Steckdosen oder Komponenten durchführen. Dies kann zu einer verbesserten Genauigkeit bei der Analyse und Interpretation von Schaltplänen führen. Ein weiterer Vorteil ist die Möglichkeit, automatisch relevante Informationen über elektrische Betriebsmittel zu extrahieren und zu speichern. Dazu gehören z.B. die Identifizierung von Kabeltypen, Steckdosenarten oder Komponenteneigenschaften. Darüber hinaus kann diese Technik auch dazu beitragen, dass Fehler bei der Planung und Installation von elektrischen Anlagen minimiert werden können. Durch eine genauere Analyse von Schaltplänen können Elektriker besser erkennen, welche Komponenten und Kabel benötigt werden, um sicherzustellen, dass die Anlage korrekt installiert wird.

Es kann vorgesehen sein, dass das Erkennen des zumindest einen elektrischen Betriebsmittels ein Erkennen zumindest eines Textzugs im Schaltplan-Dokument mittels eines Texterkennungs-Modells umfasst. Es kann vorgesehen sein, dass das Erkennen des zumindest einen elektrischen Betriebsmittels ferner ein Bestimmen, zumindest teilweise basierend auf dem erkannten zumindest einen Textzug, dass es sich bei dem zumindest einen grafischen Objekt um ein elektrisches Betriebsmittel handelt, umfasst. Hierdurch kann der Computer eine noch genauere und präzisere Identifizierung von elektrischen Betriebsmitteln wie z.B. Bezeichnungen für Kabel, Steckdosen oder Komponenten durchführen, was zu einer verbesserten Genauigkeit bei der Analyse und Interpretation von Schaltplänen führen kann. Ein weiterer Vorteil ist die Möglichkeit, automatisch spezifische relevante Informationen über elektrische Betriebsmittel zu extrahieren und zu speichern. Dazu gehören z.B. die Identifizierung von Kabeltypen, Steckdosenarten oder Komponenteneigenschaften sowie die Analyse von Bezeichnungen wie "12V" für eine Batterie oder "AC 230V" für einen Stromversorgungsteil. Darüber hinaus kann diese Technik auch dazu beitragen, dass Fehler bei der Planung und Installation von elektrischen Anlagen noch weiter minimiert werden können.

Es kann vorgesehen sein, dass das Erzeugen der maschinenlesbaren Repräsentation ein Erkennen zumindest einer elektrischen Klemme mittels eines Klemmen-Erkennungs-Modells umfasst. Hierdurch kann der Computer eine genauere und präzisere Identifizierung von elektrischen Klemmen wie z.B. Schalterklemmen, Verbindungsklemmen oder Sicherheitsklemmen durchführen. Dies kann zu einer weiter verbesserten Genauigkeit bei der Analyse und Interpretation von Schaltplänen führen. Ein weiterer Vorteil ist die Möglichkeit, automatisch relevante Informationen über elektrische Klemmen zu extrahieren und zu speichern. Dazu gehören z.B. die Identifizierung des Klemmentyps, die Anzahl der Klemmleitungen oder die Position der Klemme in Bezug auf andere Komponenten. Darüber hinaus kann diese Technik auch dazu beitragen, dass Fehler bei der Planung und Installation von elektrischen Anlagen noch weiter minimiert werden können. Durch eine genauere Analyse von Schaltplänen können Elektriker besser erkennen, welche Klemmen benötigt werden, um sicherzustellen, dass die Anlage korrekt installiert wird. Beispielsweise kann ein Stecker mit einem bestimmten Typ (z.B. 3-polig) korrekt angeschlossen werden, wenn eine Klemme als "Stecker-Klemme" erkannt wird. Dies ermöglicht es dem Elektriker, die richtigen Verbindungen zu treffen und Fehler zu vermeiden.

Es kann vorgesehen sein, dass das Erzeugen der maschinenlesbaren Repräsentation ferner ein Bestimmen, zumindest teilweise basierend auf der erkannten zumindest einen Klemme und dem erkannten zumindest einen elektrischen Betriebsmittel, zumindest eines Anschlusses des elektrischen Betriebsmittels umfassen. Dies bietet mehrere Vorteile: Durch die Kombination von erkannten Klammen und Betriebsmitteln kann ein Elektriker sicherstellen, dass alle Verbindungen korrekt angelegt sind. Die Kombination von erkannten Klammen und Betriebsmitteln reduziert die Wahrscheinlichkeit von Fehlern bei der Verbindungserstellung. Durch die korrekte Anschaffung von Verbindungen kann die Sicherheit des elektrischen Systems erhöht werden, da Fehler wie Kurzschlüsse oder Überlastungen vermieden werden können. Durch die automatische Identifizierung von Verbindungen kann der Planungs- und Ausführungsprozess beschleunigt werden.

Es kann vorgesehen sein, dass das Erzeugen der maschinenlesbaren Repräsentation ferner ein Erkennen der zumindest einen elektrischen Verbindung mittels eines Verbindungs-Erkennungs-Modells umfasst. Hierdurch kann die Genauigkeit bei der Verbindungserstellung erhöht werden, da durch die Erkennung zumindest einer elektrischen Verbindung im Schaltplan z.B. ein Elektriker sicherstellen kann, dass alle Verbindungen korrekt angelegt sind.

Es kann vorgesehen sein, dass das Erzeugen der maschinenlesbaren Repräsentation ferner ein Zuordnen der zumindest einen elektrischen Verbindung zu dem zumindest einen elektrischen Betriebsmittel umfasst. Durch das Zuordnen von Verbindungen kann die Genauigkeit des elektrischen Systems erhöht werden, da alle Verbindungen korrekt an den richtigen Stellen platziert sind und Fehler bei der Verbindungserstellung reduziert werden können. Dies ermöglicht eine schnelle Identifizierung von Problemen im System, was die Reparaturzeit reduziert. Darüber hinaus kann das Zuordnen von Verbindungen zu einer automatisierten Überwachung des elektrischen Systems führen, was die Sicherheit erhöht und Fehler wie Kurzschlüsse oder Überlastungen verhindern kann. Schließlich kann dies auch zu einer Vereinfachung komplexer Systeme führen, da alle Verbindungen korrekt angelegt werden können.

Es kann vorgesehen sein, dass das Erkennen des zumindest einen elektrischen Betriebsmittels ferner ein Abgleichen des zumindest einen grafischen Objekts mit einem oder mehreren Referenzobjekten umfasst. Das Referenzobjekt kann einem elektrischen Betriebsmittel entsprechen, dessen Form, Aufbau und/oder Funktion denen des grafischen Objekts innerhalb des Schaltplan-Dokuments im Wesentlichen entspricht. Das Abgleichen des zumindest eines grafischen Objekts mit einem oder mehreren Referenzobjekten bietet technische Vorteile, wie zum Beispiel eine genauere Identifizierung und Lokalisierung von elektrischen Betriebsmitteln. Durch das Abgleichen kann die Genauigkeit der Erkennung erhöht werden, da das System in der Lage ist, den grafischen Objekt mit dem korrekten Referenzobjekt abzugleichen. Dies führt zu einer besseren Zuverlässigkeit und Präzision bei der Identifizierung von elektrischen Betriebsmitteln. Darüber hinaus kann das Abgleichen auch dazu beitragen, dass falsche oder verwandte Objekte ausgeschlossen werden können, was die Sicherheit des Systems erhöht.

Es kann vorgesehen sein, dass, wenn die erzeugte maschinenlesbare Repräsentation mindestens ein elektrisches Betriebsmittel innerhalb des Schaltplan-Dokuments falsch und/oder nicht darstellt, das Verfahren ferner ein Empfangen einer Korrektur-Benutzereingabe zur richtigen Darstellung des falsch dargestellten elektrischen Betriebsmittels und/oder ein Empfangen eines Referenzobjekts zur Darstellung des nicht dargestellten elektrischen Betriebsmittels umfasst. Hierdurch kann die Genauigkeit der erzeugten maschinenlesbaren Repräsentation weiter erhöht werden, da das System auf Korrekturen reagiert und falsche Darstellungen von elektrischen Betriebsmitteln korrigiert. Dies führt zu einer besseren Zuverlässigkeit und Präzision des Systems. Darüber hinaus kann das Verfahren auch dazu beitragen, dass fehlerhafte oder unvollständige Informationen ausgeschlossen werden können, was die Sicherheit und Qualität der Repräsentation erhöht. Außerdem kann das System durch den Empfang eines Referenzobjekts zur Darstellung des nicht dargestellten elektrischen Betriebsmittels auch lernen und verbessern, um in Zukunft ähnliche Situationen besser auf die spezifischen Bedürfnisse der Anwendung reagieren zu können.

Es kann vorgesehen sein, dass das Objekterkennungs-Modell, das Texterkennungs-Modell, das Klemmen-Erkennungs-Modell und/oder das Verbindungs-Erkennungs-Modell getrennt voneinander trainierbar sind. Durch ein getrenntes, individuelles Trainieren kann jedes Modell spezielle Anforderungen und Herausforderungen annehmen, was zu einer besseren Leistung in den jeweiligen Bereichen führt. Dies vermeidet es auch, dass Fehler bei einem Modell auf andere Modelle übertragen werden. Darüber hinaus kann das getrennte Trainieren dazu beitragen, dass jedes Modell besser an die spezifischen Anforderungen der jeweiligen Aufgabe angepasst wird. Dies führt zu einer höheren Genauigkeit und Zuverlässigkeit des Systems, da jede Komponente auf ihre eigenen Herausforderungen trainiert wurde. Außerdem kann das Trennen der Modelle auch dazu beitragen, dass die Modellierung komplexer Systeme wie Schaltpläne oder Klemmen-Verbindungs-Szenarien verbessert werden kann. Jedes Modell kann speziell auf seine jeweilige Komplexität trainiert werden, was zu einer besseren Erweiterbarkeit und Anpassungsfähigkeit des Systems führt.

Gemäß einem weiteren Aspekt wird eine Datenstruktur bereitgestellt, welche eine maschinenlesbare Repräsentation eines Schaltplan-Dokuments umfasst, welche durch irgendeines der hier offenbarten Verfahren erzeugt wurde.

Gemäß einem weiteren Aspekt wird eine Datenverarbeitungsvorrichtung bereitgestellt, umfassend Mittel zum Durchführen der irgendeines der hier offenbarten Verfahren.

Gemäß einem weiteren Aspekt wird ein Computerprogramm und/oder ein computerlesbares Medium, auf dem ein Computerprogramm gespeichert ist, bereitgestellt. Das Computerprogramm umfasst Befehle, die bei der Ausführung des Computerprogramms durch eine Datenverarbeitungsvorrichtung diese veranlassen, irgendeines der hier offenbarten Verfahren auszuführen.

### KURZBESCHREIBUNG DER FIGUREN

Die Erfindung kann anhand der folgenden Figuren besser verstanden werden:
- Fig. 1:: Ein Flussdiagramm eines Verfahrens zur Erzeugung einer maschinenlesbaren Repräsentation eines Schaltplan-Dokuments gemäß einer beispielhaften Ausführungsform der vorliegenden Erfindung.
- Fig. 2:: Eine Datenverarbeitungsvorrichtung gemäß einer beispielhaften Ausführungsform der vorliegenden Erfindung.
- Fig. 3:: Ein Schaltplan-Dokument gemäß einer beispielhaften Ausführungsform der vorliegenden Erfindung.
- Fig. 4:: Eine maschinenlesbare Repräsentation eines Schaltplan-Dokuments gemäß einer beispielhaften Ausführungsform der vorliegenden Erfindung.
- Fig. 5:: Einen auf einer grafischen Benutzeroberfläche dargestellten Graphen gemäß einer beispielhaften Ausführungsform der vorliegenden Erfindung.
- Fig. 6:: Eine Systemarchitektur zur Erzeugung und Verarbeitung von maschinenlesbaren Repräsentationen von Schaltplan-Dokumenten gemäß einer beispielhaften Ausführungsform der vorliegenden Erfindung.

### DETAILLIERTE BESCHREIBUNG

Im Folgenden werden repräsentative Ausführungsformen, die in den beigefügten Zeichnungen dargestellt sind, erläutert. Es sollte verstanden werden, dass die abgebildeten Ausführungsformen und die folgenden Beschreibungen sich auf Beispiele beziehen, die nicht dazu gedacht sind, die Ausführungsformen auf eine bevorzugte Ausführungsform zu beschränken.

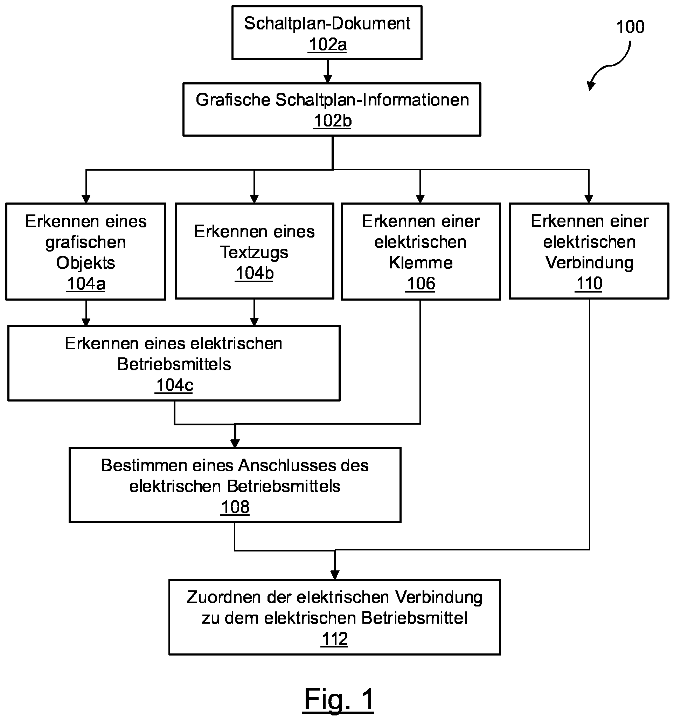

Fig. 1 zeigt ein Flussdiagramm eines Verfahrens 100 zum Erzeugen einer maschinenlesbaren Repräsentation eines Schaltplan-Dokuments 102a gemäß eines Ausführungsbeispiels. Das Schaltplan-Dokument 102a repräsentiert eine dezentrale elektrische Anlage. Das Schaltplan-Dokument 102a umfasst grafische Schaltplan-Informationen 102b.

Nach dem Empfangen des Schaltplan-Dokuments wird eine maschinenlesbare Repräsentation zumindest teilweise basierend auf den grafischen Schaltplan-Informationen 102b erzeugt, beispielsweise mittels maschinellen Lernens. Das Schaltplan-Dokument 102a kann beispielsweise in der Form einer PDF-Datei vorliegen. Dabei kann pro Seite des PDFs ein Bild erzeugt werden, welches jeweils als Grundlage für das Erzeugen der maschinenlesbaren Repräsentation dient. Zum Beispiel können die jeweiligen Bilder als Eingabe für ein Modell des maschinellen Lernens dienen. Das Modell ist zum Verarbeiten der Bilder konfiguriert, was das Erkennen und Klassifizieren von Objekten umfassen kann. Das Konfigurieren des Modells kann ein Trainieren des Modells mittels entsprechend gelabelter Bilder umfassen. Dabei kann das Modell entweder von Grund auf trainiert werden (d.h. es wird ein untrainiertes Model verwendet) oder ein vortrainiertes Model verwendet werden. Im Falle eines vortrainierten Modells kann dieses zusätzlich noch mittels gelabelter Bilder von Schaltplänen zusätzlich trainiert werden ("Finetuning").

Bei dem Trainieren des Modells wird das Modell insbesondere auf das Erkennen der Ränder der im Schaltplan dargestellten elektrischen Betriebsmittel sowie deren zugehörigen elektrischen Verbindungen sensibilisiert. Dies ist möglich, da diese typischerweise über kontraststarke Ränder bzw. Linien verfügen, anhand welcher das Modell bzw. die Modelle in der Lage sind, ein Objekt (z.B. ein Betriebsmittel, eine Verbindung etc.) zu erkennen.

Dabei kann die maschinenlesbare Repräsentation einen auf einer grafischen Benutzeroberfläche darstellbaren Graphen umfassen, welcher zumindest ein im Schaltplan-Dokument 102a dargestelltes elektrisches Betriebsmittel und zumindest eine im Schaltplan-Dokument dargestellte elektrische Verbindung anzeigt.

Das Erzeugen der maschinenlesbaren Repräsentation kann ein Erkennen 104c eines elektrischen Betriebsmittels umfassen. Das Erkennen 104c eines elektrischen Betriebsmittels kann ein Erkennen 104a eines grafischen Objekts und/oder ein Erkennen 104b eines Textzugs im Schaltplan-Dokument 102a umfassen. Hierfür kann ein Objekterkennungs-Modell bzw. ein Texterkennungs-Modell verwendet werden. Als Objekterkennungs-Modell kann beispielsweise ein Convolutional Neural Network (CNN) verwendet werden. Zum Beispiel basierend auf der EffNet-Architektur, der U-Net-Architektur oder YOLO-basierte ("You Only Look Once") Modelle implementiert sein. Als Texterkennungs-Modell kann ein beispielsweise eine ABINet-Architektur verwendet werden. Die Ausgabe des Modells bzw. der Modelle kann eine Liste sein, welche Vorschläge zu erkannten elektrischen Betriebsmitteln enthält.

In einem Ausführungsbeispiel, in welchem sowohl ein grafisches Objekt und ein Textzug im Schaltplan-Dokument 102a erkannt werden, kann zumindest teilweise basierend auf dem erkannten zumindest einen Textzug, bestimmt werden, dass es sich bei dem grafischen Objekt um ein elektrisches Betriebsmittel handelt. Es kann ferner die Art des elektrischen Betriebsmittels bestimmt werden, d.h. um welches elektrische Betriebsmittel es sich handelt. Dabei kann eine entsprechende Betriebsmittelkennzeichnung (BMZ) verwendet werden. Diese erleichtert das Erkennen von relevanten Textzügen, d.h. von Textzügen, welchen entsprechende elektrische Betriebsmitteln zugeordnet werden können. Dies kann besonders dann hilfreich sein, wenn sich andere, nicht relevante Textzüge, d.h. Textzüge, welchen keine elektrische Betriebsmittel zugeordnet werden können, im Schaltplan-Dokument befinden. Die BMZ können dabei eindeutige Anzeiger (z.B. spezielle Symbole wie beispielsweise "+" oder "-" oder Nr. bzw. IDs der entsprechenden Betriebsmittel) umfassen. Basierend auf diesen Anzeigern kann das Erkennen von relevanten Textzügen verbessert werden und sogleich nicht relevante Textzüge ignoriert bzw. weggelassen werden.

Das Erkennen 104c des zumindest einen elektrischen Betriebsmittels kann ferner ein Abgleichen des zumindest einen grafischen Objekts mit einem oder mehreren Referenzobjekten umfassen. Das Referenzobjekt kann einem elektrischen Betriebsmittel entsprechen dessen Form, Aufbau und/oder Funktion denen des grafischen Objekts innerhalb des Schaltplan-Dokuments 102a im Wesentlichen entspricht. Dieses Vergleichen (auch als "Template-Matching" bezeichnet) kann sinnvoll sein, um die Effizienz der Erkennung zu verbessern. In Schaltplan-Dokumenten kommen häufig elektrische Betriebsmittel vor, welche fast immer den gleichen Aufbau haben. Zum Beispiel hat ein optischer Sensor oder ein Ultraschall-Sensor fast immer dasselbe Standard-Schaltbild. Dieses kann als Referenzobjekt hinterlegt werden (z.B. in einer Datenbank 604 gespeichert werden). Wird ein grafisches Objekt erkannt, so kann dieses zunächst mit den vorhanden Referenzobjekten verglichen werden, um das entsprechende elektrische Betriebsmittel zu erkennen. Erst wenn ein solcher Vergleich nicht erfolgreich war, wird auf ein Klassifikationsergebnis des Modells zurückgegriffen. War der Vergleich jedoch erfolgreich, so ist das Ergebnis nicht nur mit hoher Wahrscheinlichkeit korrekt, sondern man kann sich eine Ausführung des Modells sparen. Dadurch werden Rechenressourcen effizient genutzt, da ein Abrufen der Referenzobjekte und Vergleichen weniger rechenintensiv als das Ausführen eines Modells ist.

Das Verfahren 100 kann ferner ein Erkennen 106 zumindest einer elektrischen Klemme umfassen. Dies kann mittels eines Klemmen-Erkennungs-Modells geschehen. Dieses kann beispielsweise auf dem YOLO-Ansatz basieren.

In einem Ausführungsbeispiel, in welchem ein elektrisches Betriebsmittel und eine zugehörige elektrische Klemme erkannt wurde, kann zumindest teilweise basierend auf der erkannten zumindest einen Klemme und dem erkannten zumindest einen elektrischen Betriebsmittel, zumindest ein Anschluss des elektrischen Betriebsmittels bestimmt werden 108.

Das Verfahren 100 kann ferner ein Erkennen 110 einer elektrischen Verbindung umfassen. Dies kann mittels eines Verbindungs-Erkennungs-Modells geschehen. Dieses kann beispielsweise auf dem YOLO-Ansatz basieren. Das Modell kann ferner dazu konfiguriert sein, elektrische Verbindungen über mehrere Seiten hinweg zu kombinieren. D.h. es kann eine Verbindung zwischen zwei elektrischen Betriebsmitteln, welche sich auf unterschiedlichen Seiten/Bildern befinden, erkannt werden.

In einem Ausführungsbeispiel, in welchem eine elektrische Verbindung 110 erkannt wurde, kann das Verfahren 110 ein Zuordnen 112 der elektrischen Verbindung zu dem elektrischen Betriebsmittel umfassen.

Das Verfahren 100 kann ferner irgendeinen der oben erwähnten Aspekte umfassen.

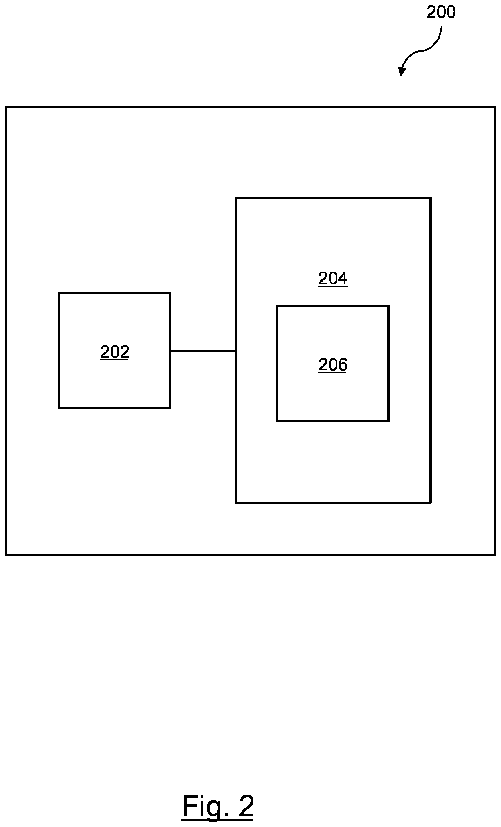

Fig. 2 zeigt eine Datenverarbeitungsvorrichtung 200 gemäß einer beispielhaften Ausführungsform der Erfindung. Die Datenverarbeitungsvorrichtung kann Mittel zum Durchführen des Verfahrens gemäß der vorliegenden Offenbarung umfassen (z.B. das Verfahren 100). Bei den Mitten kann es sich um einen Prozessor 202 und einen Speicher 204 handeln. Der Prozessor 202 und der Speicher 204 können wirkverbunden sein. Im Speicher 204 kann ein Computerprogramm 206 gespeichert sein, wobei das Computerprogramm 206 Anweisungen umfasst, die, wenn das Computerprogramm 206 von einem Computer ausgeführt wird, den Computer veranlassen, das Verfahren nach irgendeinem der erwähnten Aspekte (z.B. das Verfahren 100) auszuführen.

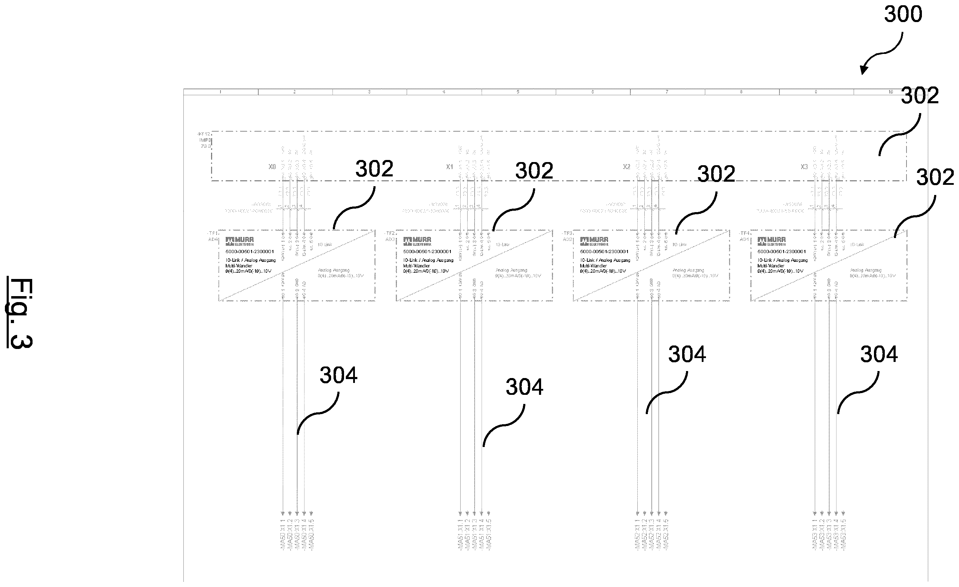

Fig. 3 zeigt ein Schaltplan-Dokument 300 gemäß einer beispielhaften Ausführungsform der Erfindung. Das Schaltplan-Dokument 300 umfasst grafische Schaltplan-Informationen, welche eine Vielzahl an elektrischen Betriebsmitteln 302 und eine Vielzahl von elektrischen Verbindungen 304 darstellen. Ein derartiges Schaltplan-Dokument 300 kann als Eingabe für das Verfahren zum Erzeugen einer maschinenlesbaren Repräsentation des Schaltplan-Dokuments 300 gemäß Aspekten der vorliegenden Offenbarung dienen, beispielsweise für das Verfahren 100 in Fig. 1.

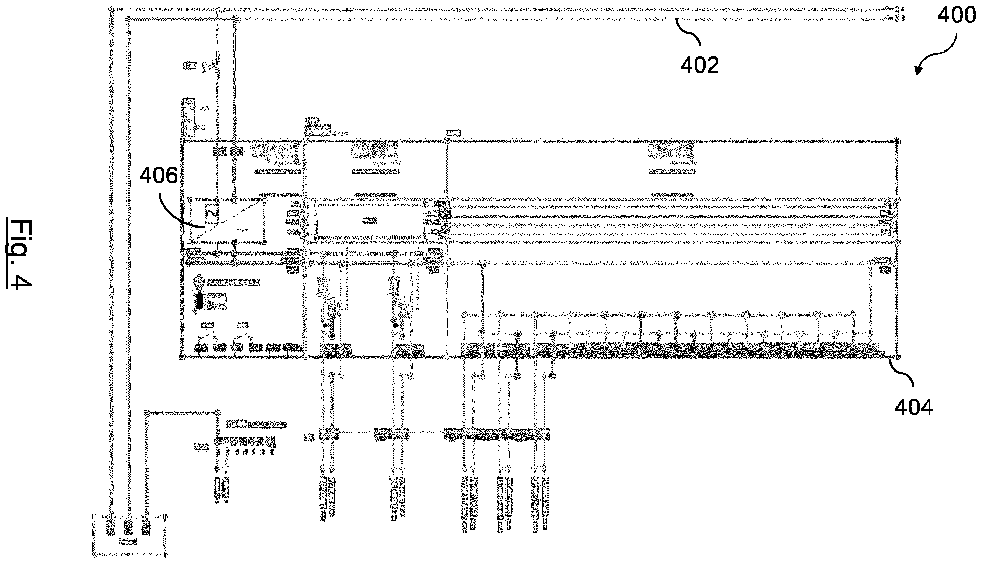

Fig. 4 zeigt eine maschinenlesbare Repräsentation 400 eines Schaltplan-Dokuments gemäß einer beispielhaften Ausführungsform der Erfindung. Die maschinenlesbare Repräsentation 400 kann beispielsweise mit dem Verfahren gemäß Aspekten der vorliegenden Offenbarung erzeugt werden, beispielsweise mit dem Verfahren 100 in Fig. 1. In der maschinenlesbaren Repräsentation 400 sind erkannte elektrische Betriebsmittel 404 mittels Bounding-Boxen von anderen erkannten elektrischen Betriebsmitteln 406 abgegrenzt. Zugehörige erkannte elektrische Verbindungen 402 sind als Linien dargestellt.

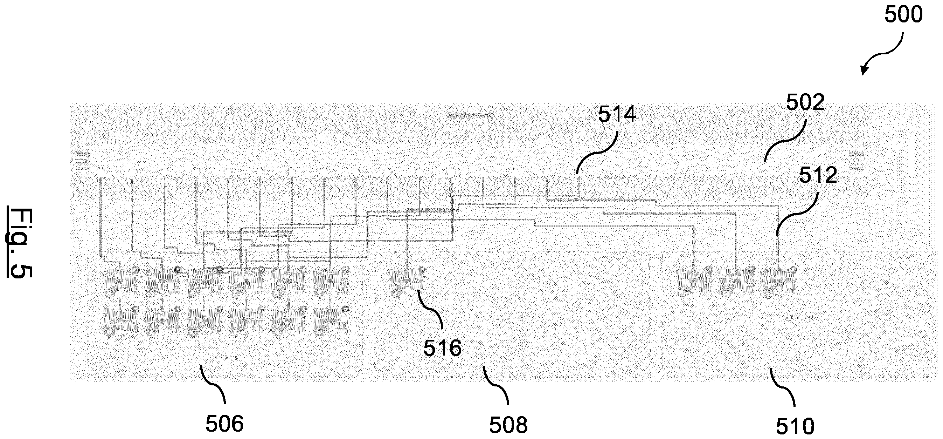

Fig. 5 zeigt einen auf einer grafischen Benutzeroberfläche dargestellten Graphen 500 gemäß einer beispielhaften Ausführungsform der Erfindung. Der Graph 500 zeigt eine strukturierte Darstellung eines Schaltplan-Dokuments 300 eines Schaltschranks. Der Graph 500 umfasst eine Vielzahl von elektrischen Betriebsmitteln 502, 506-510, zugehörige elektrische Verbindungen 512 sowie entsprechende Anschlüsse 514. Ein Betriebsmittel 508 kann dabei eine oder mehrere weitere elektrische Betriebsmittel 516 umfassen (z.B. Sensoren wie Ultraschall- oder Optiksensoren bzw. entsprechende Aktoren).

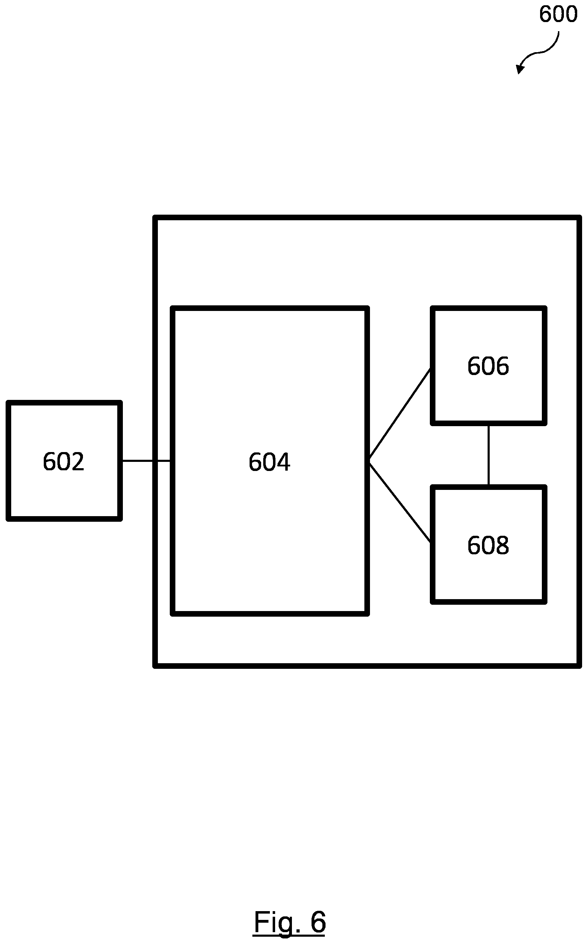

Fig. 6 zeigt eine Systemarchitektur eines Systems 600 zur Erzeugung und Verarbeitung von maschinenlesbaren Repräsentationen 400 von Schaltplan-Dokumenten 300 gemäß einer beispielhaften Ausführungsform der Erfindung. Dadurch wird ein Benutzer bei der technischen Planung, Konstruktion bzw. Instandhaltung einer elektrischen Anlage unterstützt.

Das System 600 umfasst ein Importmodul 602, eine Datenbank 604, ein Darstellungsmodul 606 sowie ein Optimierungsmodul 608. Eines oder mehrere dieser Module des Systems 600 kann bzw. können in Hardware (z.B. durch die Datenverarbeitungsvorrichtung 200) und/oder Software (z.B. durch das Computerprogramm 206) implementiert sein.

Das Importmodul 602 ist konfiguriert, um eine Eingabe umfassend ein Schaltplan-Dokument 300 (z.B. als PDF) zu verarbeiten und aus diesem eine maschinenlesbare Repräsentation 400 zu erzeugen. Hierzu kann das Importmodul 602 konfiguriert sein, um das Verfahren gemäß der vorliegenden Offenbarung durchzuführen (z.B. das Verfahren 100 in Fig. 1). Das Schaltplan-Dokument 300 und/oder die zugehörige maschinenlesbare Repräsentation 400 wird dann in der Datenbank 604 gespeichert. Die Eingabe kann ferner Informationen zu elektrischen Betriebsmitteln (z.B. Gerätedaten) und/oder Automation-Markup-Language (AML) Informationen über die elektrische Anlage umfassen. Die Eingabe kann ferner eine Benutzereingabe (z.B. eine Korrektur-Benutzereingabe und/oder ein Referenzobjekt) umfassen.

Das Darstellungsmodul 606 ist konfiguriert, um Daten (z.B. maschinenlesbare Repräsentationen 400 von Schaltplan-Dokumenten 300) aus der Datenbank 604 auszulesen und darzustellen (z.B. auf einer elektronischen Anzeigevorrichtung). Dies kann beispielsweise mittels eines Graphen 500 (siehe Fig. 5) geschehen, wodurch einem Benutzer (z.B. ein Anlagenplaner) eine bessere Übersicht der elektrischen Anlage bereitgestellt wird. Dies ist wichtig, da die Komplexität von elektrischen Anlagen, insbesondere von dezentralen elektrischen Anlagen, hoch ist, wodurch sich oft Ineffizienzen in der Anlagenplanung ergeben. Durch die bereitgestellte Übersicht, wird ein Benutzer dabei unterstützt Ineffizienzen oder Fehler in einer real existierenden Anlage zu identifizieren und zu beheben. Ein Fehler kann z.B. eine Ursache sein aufgrund welcher die Anlage bis zur Beseitigung der Ursache nicht betreibbar ist.

Die bereitgestellte Übersicht hilft dem Benutzer ebenfalls dabei, eine elektrische Anlage, welche sich in der Planungsphase befindet, effizient zu planen. In beiden Fällen, unterstützt die Darstellung den Nutzer bei der technischen Planung, Konstruktion bzw. Instandhaltung einer elektrischen Anlage (z.B. beim Umbau einer zentralen Anlage zu einer dezentralen Anlage).

Das Optimierungsmodul 608 ist konfiguriert, um Daten (z.B. maschinenlesbare Repräsentationen 400 von Schaltplan-Dokumenten 300) aus der Datenbank 604 auszulesen und diese zu optimieren. Zum Beispiel kann das Optimierungsmodul 608 eine maschinenlesbare Repräsentation eines Schaltplan-Dokuments 300 einer elektrischen Anlage hinsichtlich der Topologie optimieren. Somit kann eine effizientere Anlagenplanung erzielt werden. Beispielsweise kann ein Benutzer sich zunächst die maschinenlesbare Repräsentation 400 mittels des Darstellungsmoduls 608 darstellen lassen. Identifiziert der Benutzer eine Ineffizienz, so kann er eine Angabe über die Ineffizienz als zusätzliche Eingabe für das Optimierungsmodul 608 bereitstellen, welches daraufhin mit der Optimierung beginnt. Alternativ kann er der Benutzer die Optimierung auch ohne die zusätzliche Angabe starten. Dies kann hilfreich sein, wenn der Benutzer beim ersten Betrachten der dargestellten maschinenlesbaren Repräsentation 400 des Schaltplan-Dokuments 300 keine Ineffizienzen erkennen kann. Somit kann er die Optimierung als eine technische Verifizierung der elektrischen Anlage (d.h. als eine Plausibilitätsprüfung) verwenden. Ergibt die Optimierung keine weitere Veränderung an dem Schaltplan 300, so kann der Benutzer von einer technisch funktionsfähigen und effizienten Anlage ausgehen. Ergibt die Optimierung eine Veränderung am Schaltplan 300, so kann der Benutzer davon ausgehen, dass der jetzige Zustand der Anlage zumindest hinsichtlich der Effizienz nicht optimal geplant bzw. konstruiert ist.

Ist die Optimierung abgeschlossen, so kann der Benutzer sich die nun optimierte maschinenlesbare Repräsentation 400 erneut mittels des Darstellungsmoduls 608 darstellen lassen. Dieser Vorgang kann iterativ so lange wiederholt werden, bis der Benutzer keine Ineffizienzen mehr identifizieren kann und/oder das Optimierungsmodul 608 die maschinenlesbare Repräsentation 400 nicht weiter optimieren kann (d.h. die Optimierung konvergiert).

Dieser Iterationszyklus ermöglicht ebenfalls das Umplanen von zentralen Anlagen hinzu dezentralen Anlagen. Hierfür wird ein Schaltplan-Dokument 300 einer zentralen Anlage in eine maschinenlesbare Repräsentation 400 umgewandelt und diese dann iterativ so optimiert, dass eine funktionsfähige und effizient arbeitende dezentrale Anlage daraus entstehen kann.

Der hier verwendete Begriff "und/oder" schließt alle Kombinationen von einem oder mehreren der aufgeführten Aspekte ein und kann mit "/" abgekürzt werden.

Obwohl einige Aspekte im Zusammenhang mit einem Gerät beschrieben wurden, ist es klar, dass diese Aspekte auch eine Beschreibung des entsprechenden Verfahrens darstellen, wobei ein Block oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der vorliegenden Offenbarung können auf einem Computersystem implementiert werden. Bei dem Computersystem kann es sich um ein lokales Computergerät (z. B. Personalcomputer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. an einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren umfassen, die von beliebigem Typ sein können. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die mit Wechselmedien wie Compact Discs (CD), Flash-Speicherkarten, digitalen Videodisks (DVD) und dergleichen umgehen. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder jedes andere Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der vorliegenden Offenbarung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenarbeiten (oder zusammenarbeiten können), so dass das jeweilige Verfahren durchgeführt wird. Daher kann das digitale Speichermedium computerlesbar sein.

Einige Ausführungsformen gemäß der vorliegenden Offenbarung umfassen einen Datenträger mit elektronisch lesbaren Steuersignalen, die mit einem programmierbaren Computersystem zusammenarbeiten können, so dass eines der hier beschriebenen Verfahren durchgeführt wird. Im Allgemeinen können Ausführungsformen der vorliegenden Offenbarung als Computerprogrammprodukt mit einem Programmcode implementiert werden, wobei der Programmcode zur Ausführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hierin beschriebenen Verfahren, das auf einem maschinenlesbaren Träger gespeichert ist.

Mit anderen Worten, eine Ausführungsform der vorliegenden Offenbarung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Offenbarung ist daher ein Speichermedium (oder ein Datenträger oder ein computerlesbares Medium), auf dem das Computerprogramm zur Durchführung eines der hier beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Offenbarung ist ein Gerät wie hierin beschrieben, das einen Prozessor und das Speichermedium umfasst.

Eine weitere Ausführungsform der vorliegenden Offenbarung ist daher ein Datenstrom oder eine Folge von Signalen, die das Computerprogramm zur Durchführung eines der hier beschriebenen Verfahren darstellen. Der Datenstrom oder die Signalfolge kann beispielsweise so konfiguriert sein, dass er/sie über eine Datenkommunikationsverbindung, z.B. über das Internet, übertragen wird.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform gemäß der vorliegenden Offenbarung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Wege). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

## Patentansprüche

1. Ein Verfahren (100) zum Erzeugen einer maschinenlesbaren Repräsentation eines Schaltplan-Dokuments (102a), wobei das Schaltplan-Dokument (102a) eine dezentrale elektrische Anlage repräsentiert, wobei das Verfahren zumindest die folgenden Schritte umfasst:
- Empfangen des Schaltplan-Dokuments (102a), wobei das Schaltplan-Dokument (102a) grafische Schaltplan-Informationen (102b) umfasst; und
- Erzeugen der maschinenlesbaren Repräsentation zumindest teilweise basierend auf den grafischen Schaltplan-Informationen (102b) mittels maschinellen Lernens;
- wobei die maschinenlesbare Repräsentation einen auf einer grafischen Benutzeroberfläche darstellbaren Graphen umfasst, welcher zumindest ein im Schaltplan-Dokument (102a) dargestelltes elektrisches Betriebsmittel und zumindest eine im Schaltplan-Dokument dargestellte elektrische Verbindung anzeigt.

2. Das Verfahren nach Anspruch 1, wobei das Erzeugen der maschinenlesbaren Repräsentation umfasst: Erkennen (104c) des zumindest einen elektrischen Betriebsmittels.

3. Das Verfahren nach Anspruch 2, wobei das Erkennen (104c) des zumindest einen elektrischen Betriebsmittels umfasst: Erkennen (104a) zumindest eines grafischen Objekts im Schaltplan-Dokument (102a) mittels eines Objekterkennungs-Modells.

4. Das Verfahren nach Anspruch 2 oder 3, wobei das Erkennen (104c) des zumindest einen elektrischen Betriebsmittels umfasst: Erkennen (104b) zumindest eines Textzugs im Schaltplan-Dokument mittels eines Texterkennungs-Modells.

5. Das Verfahren nach Anspruch 3 und 4, wobei das Erkennen (104c) des zumindest einen elektrischen Betriebsmittels ferner umfasst: Bestimmen, zumindest teilweise basierend auf dem erkannten zumindest einen Textzug, dass es sich bei dem zumindest einen grafischen Objekt um ein elektrisches Betriebsmittel handelt.

6. Das Verfahren nach irgendeinem der vorhergehenden Ansprüche 1-5, wobei das Erzeugen der maschinenlesbaren Repräsentation umfasst: Erkennen (106) zumindest einer elektrischen Klemme mittels eines Klemmen-Erkennungs-Modells.

7. Das Verfahren nach irgendeinem der vorhergehenden Ansprüche 2-5 kombiniert mit Anspruch 6, wobei das Erzeugen der maschinenlesbaren Repräsentation ferner umfasst: Bestimmen (108), zumindest teilweise basierend auf der erkannten zumindest einen Klemme und dem erkannten zumindest einen elektrischen Betriebsmittel, zumindest eines Anschlusses des elektrischen Betriebsmittels.

8. Das Verfahren nach irgendeinem der vorhergehenden Ansprüche 1-7, wobei das Erzeugen der maschinenlesbaren Repräsentation ferner umfasst: Erkennen (110) der zumindest einen elektrischen Verbindung mittels eines Verbindungs-Erkennungs-Modells.

9. Das Verfahren nach irgendeinem der vorhergehenden Ansprüche 1-7 kombiniert mit Anspruch 8, wobei das Erzeugen der maschinenlesbaren Repräsentation ferner umfasst: Zuordnen (112) der zumindest einen elektrischen Verbindung zu dem zumindest einen elektrischen Betriebsmittel.

10. Das Verfahren nach irgendeinem der vorhergehenden Ansprüche 3-9, wobei das Erkennen (104c) des zumindest einen elektrischen Betriebsmittels ferner umfasst:
Abgleichen des zumindest eines grafischen Objekts mit einem oder mehreren Referenzobjekten, wobei ein Referenzobjekt einem elektrischen Betriebsmittel entspricht, dessen Form, Aufbau und/oder Funktion denen des grafischen Objekts innerhalb des Schaltplan-Dokuments (102a) im Wesentlichen entspricht.

11. Das Verfahren nach irgendeinem der vorhergehenden Ansprüche 1-10, wobei die erzeugte maschinenlesbare Repräsentation mindestens ein elektrisches Betriebsmittel innerhalb des Schaltplan-Dokuments (102a) falsch und/oder nicht darstellt und wobei das Verfahren ferner umfasst:
- Empfangen einer Korrektur-Benutzereingabe zur richtigen Darstellung des falsch dargestellten elektrischen Betriebsmittels; und/oder
- Empfangen eines Referenzobjekts zur Darstellung des nicht dargestellten elektrischen Betriebsmittels.

12. Das Verfahren nach irgendeinem der vorhergehenden Ansprüche 3-11, wobei das Objekterkennungs-Modell, das Texterkennungs-Modell, das Klemmen-Erkennungs-Modell und/oder das Verbindungs-Erkennungs-Modell getrennt voneinander trainierbar sind.

13. Eine Datenstruktur, welche eine maschinenlesbare Repräsentation eines Schaltplan-Dokuments (102a) umfasst, welche durch das Verfahren nach irgendeinem der vorhergehenden Ansprüche 1-12 erzeugt wurde.

14. Eine Datenverarbeitungsvorrichtung, welche Mittel zur Ausführung des Verfahrens nach irgendeinem der vorhergehenden Ansprüche 1-12 umfasst.

15. Ein Computerprogramm oder ein computerlesbares Medium, auf dem ein Computerprogramm gespeichert ist, wobei das Computerprogramm Befehle umfasst, die bei der Ausführung des Computerprogramms durch eine Datenverarbeitungsvorrichtung diese veranlassen, das Verfahren nach irgendeinem der vorhergehenden Ansprüche 1-12 auszuführen.
